Europäisches Patentamt

European Patent Office

Office européen des brevets

(11) Veröffentlichungsnummer: **0 507 081 A1**

## EUROPÄISCHE PATENTANMELDUNG

(21) Anmeldenummer: **92103327.0**

(22) Anmeldetag: **27.02.92**

(51) Int. Cl.5: **B23Q 7/14**

(30) Priorität: **30.03.91 DE 4110581**

(43) Veröffentlichungstag der Anmeldung:
**07.10.92 Patentblatt 92/41**

(84) Benannte Vertragsstaaten:
**CH DE ES FR GB IT LI**

(71) Anmelder: **ROBERT BOSCH GMBH**
**Postfach 30 02 20**
**W-7000 Stuttgart 30(DE)**

(72) Erfinder: **Baron, Wolfgang**
**Gerokstrasse 8**
**W-7150 Backnang(DE)**
Erfinder: **Nold, Erich**
**Am Ochsenwald 12A**
**W-7000 Stuttgart 80(DE)**

(54) **Einrichtung zur manuellen und/oder automatischen Montage und/oder Bearbeitung von Werkstücken.**

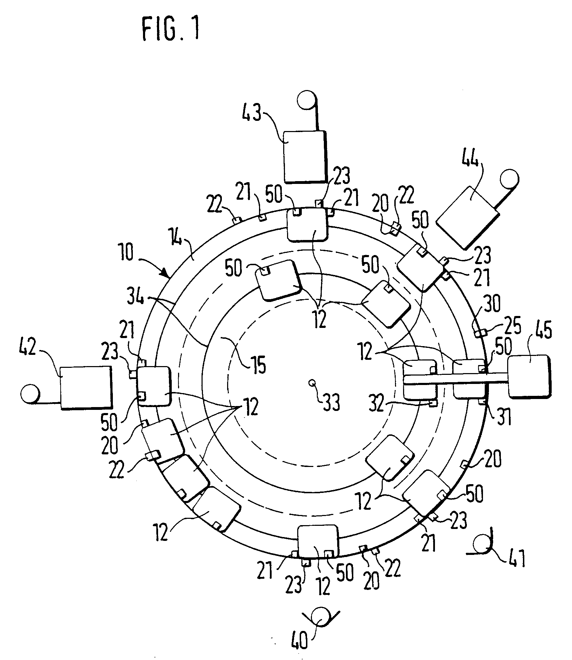

(57) Die Erfindung betrifft eine Einrichtung zur manuellen und/oder automatischen Montage und/oder Bearbeitung von Werkstücken mit einer mehrere Bearbeitungsstationen verbindenden Transportbahn, auf der Werkstücke tragende Werkstückträger (12) mittels Reibungskraft bewegbar sind, mit an den Werkstückträgern (12) angebrachten Kodierspeichern und mit jeweils einer an jeder Bearbeitungsstation vorgesehenen Lese- und Schreibeinheit (22, 23, 25) für die Kodierspeicher (50). Die Transportbahn ist eine in sich geschlossene, umlaufende Transportbahn (14), der eine zweite in sich geschlossene, umlaufende Transportbahn (15) zugeordnet ist, wobei mindestens eine Übergabeeinheit (45) angeordnet ist, welche die Werkstücke und/oder die mit Werkstücken beladenen Werkstückträger (12) von einer Transportbahn auf die andere Transportbahn und umgekehrt umzusetzen vermag (Figur 1).

FIG.1

## Stand der Technik

Die Erfindung geht aus von einer Einrichtung und einem Verfahren zur manuellen und/oder automatischen Montage und/oder Bearbeitung von Werkstücken mit einer mehrere Bearbeitungsstationen verbindenden Transportstrecke nach der Gattung des Hauptanspruchs. Zu den gebräuchlichsten Montageverfahren gehört die getaktete Fließbandmontage, die zwar eine große Leistung ermöglicht, jedoch sehr unflexibel ist, da ihre Ausbringgeschwindigkeit von der längsten Taktzeit einer Montagestation abhängig ist. Derartig getaktete Montagesysteme existieren in Rund- und Linearausführung. Sobald bei einem getakteten Montagesystem nur eine Montagestation ausfällt, muß das Transportsystem gestoppt werden oder es müßten weitere Reserve-Montagestationen vorhanden sein. Zur Erzielung der Taktunabhängigkeit ist bekannt, daß an flexibelen Linear- oder Karreeumlauf Montagelinien Neben- oder Hauptpufferstrecken vorgesehen werden, an denen Handarbeitsoder/und Automatikstationen integriert sind. Derartige in Linear- oder Karreeaufbau ausgeführte Montagelinien mit Neben- und Hauptpufferstrecken erfordern einen erheblichen Konstruktions-, Fertigungs- und Steuerungsaufwand, sind somit sehr kostenintensiv und benötigen einen hohen Flächenbedarf.

## Vorteile der Erfindung

Die erfindungsgemäße Einrichtung mit den kennzeichnenden Merkmalen des Hauptanspruchs hat demgegenüber den Vorteil, daß das Montagesystem nicht getaktet arbeitet und bei Störungen einer Montagestation das Werkstück in einen Hauptpufferumlauf umgesetzt wird, wobei während dieser Zeit, ohne den Arbeitsablauf an den anderen Montagestationen zu unterbrechen, eine Reparatur der gestörten Montagestation durchgeführt werden kann. Das Montagesysteme erlaubt die Eingliederung von mehreren Handarbeitsplätzen zwischen Automatikstationen. An getakteten Montagesystemen ist nur ein Handarbeitsplatz erlaubt.

Durch die in den Unteransprüchen aufgeführten Maßnahmen sind vorteilhafte Weiterbildungen des im Hauptanspruch angegebenen Montagesystems möglich. Besonders vorteilhaft ist die Ausführung des Montagesystems als Rundtisch. Dadurch ist eine besonders preiswerte, kompakte und platzsparende Bauweise möglich.

Aufgrund der Rundtischbauweise ist die Kapazität der Pufferbereiche erheblich größer und dadurch flexibler. Ein weiterer Vorteil des Rundtischsystems besteht darin, daß alle Bearbeitungsstationen zentral auf ein Maschinengrundgestell installiert werden können und mit einer zentralen Schutzeinrichtung absicherbar sind.

Durch die Verkettung mehrerer flexibler Rundtischsysteme können komplexe Montage- oder Bearbeitungsaufgaben abgewickelt werden, die platzsparend den Gegebenheiten in Fertigungshallen angepaßt werden können.

## Zeichnung

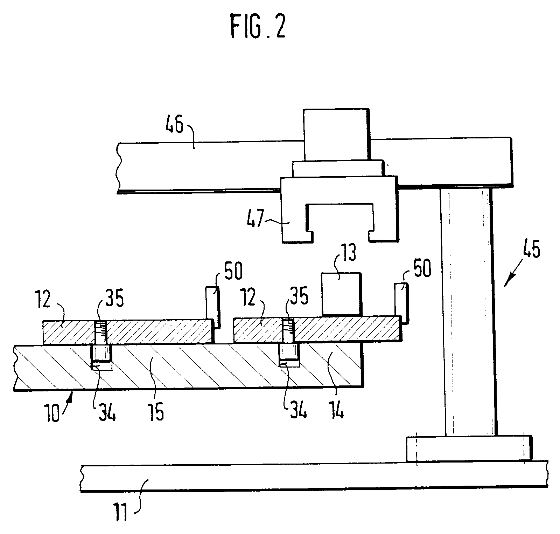

Ein Ausführungsbeispiel der Erfindung ist in der Zeichnung dargestellt und in der nachfolgenden Beschreibung näher erläutert. Es zeigen Figur 1 eine Prinzipdarstellung einer erfindungsgemäßen Einrichtung in Draufsicht und Figur 2 einen Längsschnitt eines Rundtischmontagesystems im Bereich einer Übergabeeinheit ebenfalls als Prinzipdarstellung

## Beschreibung des Ausführungsbeispiels

In Figur 1 ist mit 10 ein Rundtisch bezeichnet, auf dem mit zwei gestrichelten Linien zwei Transportbahnen 14 und 15 eingezeichnet sind. Der Rundtisch 10 ist auf einem nicht näher dargestellten Maschinengestell 11 montiert. Die beiden Transportbahnen 14, 15 sind als Kreisbahnen ausgebildet die um eine gemeinsame Achse 33 verlaufen. Um den Rundtisch 10 sind mehrere Arbeitsstationen 40 bis 44 sowie eine Übergabeeinheit 45 angeordnet. Die Arbeitsstationen 40 und 41 sind Handarbeitsplätze; die Arbeitsstationen 42 bis 44 stellen Automatikstationen dar.

Ein nicht dargestellter elektromotorischer Antrieb treibt den Rundtisch 10 an, der sich um die Achse 33 dreht. Zusammen mit der Umdrehung des Rundtisches 10 werden die auf dem Rundtisch 10 plazierten Werkstückträger 12 im Kreis bewegt. Die auf der äußeren Transportbahn 14 befindlichen Wertstückträger 12 bewegen sich dabei an den Bearbeitungsstationen 40 bis 44 und an der Übergabeeinheit 45 vorbei.

An jeder Bearbeitungsstation 40 bis 44 sowie an der Übergabeeinheit 45 sind am Maschinengestell befestigte Vorvereinzeler 20, 30 und Positionieranschläge 21, 31, 32 angeordnet. Die Vorvereinzeler 20, 30 und die Positionieranschläge 21, 31 greifen in die äußere Transportbahn 14 ein. Der im Bereich der Übergabeeinheit 45 angeordnete Positionieranschlag 32 greift in die innere Transportbahn 15 ein. Die Vorvereinzeler 20, 30 und die Positionieranschläge 21, 31, 32 wirken als Stoppeinrichtung auf die Werkstückträger 12.

Zur Führung der Werkstückträger 12 ist in den beiden Transportbahnen 14 und 15 jeweils eine Nut 34 in die Oberfläche des Rundtisches 10 eingelassen, in die, wie aus Figur 2 hervorgeht, am Werkstückträger 12 angeordnete Führungsmittel 35 eingreifen. Die Führungsmittel 35 bestehen aus zwei in einem Abstand voneinander am Werkstückträger 12 nach unten herausragende Stifte, an denen jeweils ein Rollenlager gelagert ist. Der Abstand der beiden Rollenlager am Werkstückträger 12 ist so ausgeführt, daß es nicht zum Verklemmen des Werkstückträgers 12 in der Nut 34 kommt, wenn die Werkstückträger 12 von einem Vorvereinzeler oder einem Positionieranschlag zurückgehalten werden und der Rundtisch 10 unter ihnen weitergleitet.

Jeder Werkstückträger 12 ist mit einem Kodierspeicher 50 ausgerüstet. Die Kodierspeicher 50 sind beispielsweise mechanisch betätigbare Kodierbolzen. In Förderrichtung vor jeder Bearbeitungseinheit 40 bis 44 ist jeweils eine Leseeinrichtung 22 für die Kodierspeicher 50 angeordnet. Jede Bearbeitungsstationen 40 bis 44 verfügt weiterhin über jeweils eine Schreibeinheit 23 für die Kodierspeicher 50.

Die am Rundtisch 10 positionierte Übergabeeinheit 45 ist beispielsweise gemäß Figur 2 eine Lineareinheit. Die Lineareinheit 45 ist am Maschinengestell 11 befestigt. Der Tragarm 46 der Lineareinheit 45 reicht in radialer Richtung über beide Transportbahnen 14 und 15. Am Tragarm 46 der Lineareinheit 45 ist ein Greiferelement 47 zum Greifen eines Werkstückes 13 vorgesehen.

In jeder Bearbeitungsstation 40 bis 44 ist eine nicht dargestellte Hubeinheit angeordnet, die den in Bearbeitungsposition befindlichen Werkstückträger 12 während des Bearbeitungsvorganges von der Transportfläche des Rundtisches 10 abhebt. Dazu ist die äußere Transportbahn 14 beispielsweise so ausgeführt, daß die Werkstückträger 12 radial über die Transportfläche des Rundtisches 10 überstehen und dadurch die Hubeinheit unter die Werkstückträger 12 greifen kann.

Die Anzahl der Bearbeitungsstationen und der Umfang des Rundtisches 10 sind so aufeinander abgestimmt, daß die äußere Transportbahn 14 gleichzeitig als Arbeitspuffer für die einzelnen Arbeitsstationen 40 bis 44 dient.

In der Bearbeitungsstation 40 werden von einer Arbeitskraft die Werkstücke auf die Werkstückträger 12 montiert. Dazu werden die der Bearbeitungsstation 40 zugeführte Werkstückträger 12 von einem vor der Bearbeitungsstation angeordneten Vorvereinzeler 20 zurückgehalten. Sobald die Arbeitskraft den Vorvereinzeler 20 freigibt, wird ein Werkstückträger 12 gegen den an der Bearbeitungsstation 40 angeordneten Positionieranschlag 21 gefahren. In dieser Position wird der Werkstückträger 12 von der Arbeitskraft mit Werkstücken bestückt. Nach Ausführung der Bestückung wird der Positionieranschlag durch Betätigung der Arbeitskraft freigegeben und der Werkstückträger 12 bewegt sich mit der Umdrehung des Rundtisches 10 in Richtung der Automatikstation 42. Hier wird der Werkstückträger 12 wiederum durch einen in die Transportbahn 14 hineingreifenden Vorvereinzeler 20 an seiner Weiterbewegung gehindert oder er läuft auf einen bereits vom Vorvereinzeler 20 zurückgehaltenen anderen Werkstückträger 12 auf. Dabei passiert der Werkstückträger 12 eine Leseeinheit 22 für den an ihm angebrachten Kodierspeicher 50.

Sobald von der Bearbeitungsstation 42 signalisiert wird, daß die Bearbeitung und die entsprechende Kontrolle des Bearbeitungsergebnisses beendet ist, wird das Ergebnis des Kontrollvorganges als "i.O." (in Ordnung) oder "n.i.O." (nicht in Ordnung) mittels der Schreibeinheit 23 in den Kodierspeicher 50 eingetragen und der an der Bearbeitungsstation 42 angeordnete Positionieranschlag 21 freigegeben. Während der Bearbeitung in der Bearbeitungsstation 42 ist der Werkstückträger 12 mittels der nicht dargestellten Hubeinrichtung von der Oberfläche des Rundtisches 10 abgehoben. Dies ist erforderlich, damit durch die Einwirkung auf den Werkstückträger die Reibungskraft zwischen Transportfläche des Rundtisches 10 und dem Werkstückträger 12 nicht über ein verträgliches Maß hinaus ansteigt. Die danach folgenden Bearbeitungsstationen 43 und 44 werden nach demselben Prinzip bedient.

Eine nicht dargestellte Steuerung bewirkt, daß, sobald ein Kodierspeicher eine "n.i.O."-Kodierung enthält, die Positionieranschläge 21 in den folgenden Bearbeitungsstationen nicht aktiviert werden, und dadurch der Werkstückträger 12 alle weiteren Bearbeitungsstationen, ohne bearbeitet zu werden, durchläuft. Erst wenn er die Übergabeeinheit 45 erreicht, wird er durch einen dort angeordneten Positionieranschlag 31 an seiner Weiterbewegung gehindert.

In Förderrichtung vor der Übergabestation 45 ist jeweils eine weitere Leseeinheit 25 angeordnet. Von dieser Leseeinheit 25 wird der Inhalt des Kodierspeichers 50 gelesen. Bei einer "i.O"-Kennzeichnung passiert der mit dem Werkstück beladene Werkstückträger 12 die Übergabestation 45, bis er gegen den in Förderrichtung von der Bearbeitungsstation 41 positionierten Vorvereinzeler 20 gestoppt wird.

Die Bearbeitungsstation 41 ist ebenfalls ein Handarbeitsplatz. Hier wird von einer Arbeitskraft das Werkstück vom Werkstückträger 12 entnommen. Dabei wird der Werkstückträger, wie bereits bei der Bearbeitungsstation 40 beschrieben, gegen einen Positionieranschlag 21 bewegt. Ist das Werkstück vom Werkstückträger 12 entnommen, wird von der Arbeitskraft der Positionieranschlag freigegeben und der Werkstückträger 12 kann mit dem Rundtisch 10 in Richtung der Bearbeitungsstation 40 zur Bestückung mit einem neuen Werkstück bewegt werden.

Wird von der vor der Übergabeeinheit 45 positionierten Leseeinheit 25 signalisiert, daß der Werkstückträger mit "n.i.O." kodiert ist, werden zwei an der Übergabeeinheit 45 angeordnete Positionieranschläge 31, 32 zur Wirkung gebracht, wobei der eine Anschlag 31 in die äußere Transportbahn 14 und der zweite Anschlag 32 auf gleicher Höhe in die innere Transportbahn 15 eingreift. Mittels dieser beiden Anschläge 31, 32 wird jeweils ein Werkstückträger 12 auf der äußeren Transportbahn und ein leerer Werkstückträger 12 an der inneren Transportbahn 15 positioniert. Die Erkennung, ob der auf der inneren Transportbahn 15 angeordnete Werkstückträger leer ist, kann ebenfalls über den Kodierspeicher 50 erfaßt werden.

Sobald zwei radial in einer Richtung positionierte Werkstückträger 12 an der Übergabeeinheit 45 positioniert sind, wird von dem Greiferelement 47 der Lineareinheit 45 das Werkstück 13 von dem auf der äußeren Transportbahn 14 befindlichen Werkstücktransportträger 12 abgehoben und auf den auf der inneren Transportbahn 15 plazierten Werkstückträger 12 abgesetzt. Zusammen mit der Übergabe wird der Inhalt des Kodierspeichers 50 des sich auf der äußeren Transportbahn 14 befindlichen Werkstückträgers 12 auf den Kodierspeicher des sich auf der inneren Transportbahn 15 positionierten Werkstückträger 12 übertragen. Nach erfolgter Übergabe werden die beiden Positionieranschläge 31, 32 der Übergabeeinheit 45 zurückgenommen und die beiden Werkstückträger 12 werden mit dem Rundtisch 10 weiterbewegt.

Die Übergabe von "n.i.O."-Werkstücken geschieht solange, bis die auf der inneren Transportbahn 15 positionierten Werkstückträger 12 mit Werkstücken belegt sind. Die für die Belegung notwendige Zeit sollte ausreichen, um die Störung zu beseitigen, die an einer oder mehrerer Arbeitsstationen zu einem "n.i.O."-Ergebnis des Bearbeitungsvorganges führt.

Es ist aber auch durchaus denkbar, durch eine andere Steuerung bereits vorher die auf der inneren Transportbahn 15 befindlichen "n.i.O."-Werkstücke wieder zurück auf einen auf der äußeren Transportbahn 14 befindlichen Werkstückträger 12 zurückzubringen.

Durch das Zusammenwirken von der als Arbeitspuffer ausgebildeten äußeren Transportbahn 14 und der als Hauptpufferstrecke ausgebildeten inneren Transportbahn 15 ist eine flexible Montage möglich so daß Störungen an Zuführsystemen der Automatikstationen ohne Stillstand der Anlage innerhalb einer entsprechenden Zeit beseitigt werden können.

**Patentansprüche**

1. Einrichtung zur manuellen und/oder automatischen Montage und/oder Bearbeitung von Werkstücken mit einer mehrere Bearbeitungsstationen verbindenden Förderstrecke, auf der Werkstücke tragende Werkstückträger mittels Reibungskraft bewegbar sind, mit an den Werkstückträgern angebrachten Kodierspeichern und mit an jeder Bearbeitungsstation vorgesehenen Lese- und Schreibeinheiten für die Kodierspeicher, dadurch gekennzeichnet, daß die Förderstrecke eine in sich geschlossene, umlaufende Transportbahn (14) ist, daß mindestens eine weitere in sich geschlossene, umlaufende Transportbahn (15) vorgesehen ist, und daß an mindestens einer Stelle zwischen den Transportbahnen (14, 15) Mittel vorgesehen sind, welche die Werkstücke und/oder die mit Werkstücken beladenen Werkstückträger (12) von der einen Transportbahn auf die andere Transportbahn umzusetzen vermögen.

2. Einrichtung nach Anspruch 1, dadurch gekennzeichnet, daß die erste Transportbahn (14) so dimensioniert ist, daß sie zwischen den einzelnen Arbeitstationen einen Arbeitspuffer für die jeweilige Bearbeitungsstation bildet und daß eine zweite Transportbahn (15) als Hauptpufferstrecke für von Kontrolleinrichtungen als "n.i.O." (nicht in Ordnung) erkannte Werkstücke eingesetzt ist.

3. Einrichtung nach Anspruch 1, dadurch gekennzeichnet, daß das Mittel zur Übergabe der Werkstücke und/oder der mit Werkstücken beladenen Werkstückträger (12) eine Übergabeeinheit (45) ist, welche in Förderrichtung vor der den letzten Arbeitsgang ausführenden Bearbeitungsstation (41) positioniert ist.

4. Einrichtung nach Anspruch 1, dadurch gekennzeichnet, daß die zweite Transportbahn (15) von der ersten Transportbahn (14) umschlossen ist.

5. Einrichtung nach einem der Ansprüche 1, 2 oder 3, dadurch gekennzeichnet, daß die erste Transportbahn (14) an jeder Arbeitsstation (40 bis 44) und an der Übergabeeinheit (45) mit Mitteln (20, 30) zum Vorvereinzeln und mit Mitteln (21, 31) zum Positionieren der Werkstückträger ausgerüstet ist, wobei das Mittel (20, 30) zum Vorvereinzeln in Transportrichtung vor dem jeweiligen Mittel (21, 31) zum Positionieren angeordnet ist, und daß an der zweiten Transportbahn (15) ein weiteres Mittel (32) zum Positionieren der auf der Transportbahn (15) befindlichen Werkstückkörper (12) an der Übergabeeinheit (45) angeordnet ist.

6. Einrichtung nach Anspruch 1 oder 3, dadurch gekennzeichnet, daß die Übergabeeinheit (45) mit einer Leseeinheit (25) für die Kodierspeicher (50) ausgerüstet ist und über Mittel verfügt, die bei einer Übergabe eines Werkstükkes von der ersten Transportbahn (14) auf die zweite Transportbahn (15) und umgekehrt den Inhalt des Kodierspeichers des einen Werkstückträgers auf den Kodierspeicher des anderen Werkstückträgers übertragen.

7. Einrichtung nach einem der vorhergehenden Ansprüche dadurch gekennzeichnet, daß beide Transportbahnen (14, 15) von einem Rundtisch (10) gebildet sind und sich jeweils auf der Oberfläche des Rundtisches (10) als Kreisringe erstrecken und daß der Rundtisch (10) um eine Achse (33) drehbar ist.

8. Einrichtung nach Anspruch 7, dadurch gekennzeichnet, daß zur Führung der Werkstückträger (12) beide Transportbahnen (14, 15) jeweils mit einer Nut (34) versehen sind, in die an den Werkstückträgern (12) angeordnete Führungsmittel (35) eingreifen.

9. Einrichtung nach einem der vorhergehenden Ansprüche, dadurch gekennzeichnet, daß bei einer "n.i.O."-Kodierung des Kodierspeichers (50) die Mittel (21) zum Positionieren der Werkstückträger inaktiviert sind, so daß der Werkstückträger (12) alle Bearbeitungsstationen (40 bis 44) bis zur Übergabeeinheit (45) durchläuft.

10. Einrichtung nach einem der vorhergehenden Ansprüche, dadurch gekennzeichnet, daß das an der Übergabeeinheit (45) positionierte Mittel (31) zur Positionierung des Werkstückträgers (12) und das an der zweiten Transportbahn (15) angeordnete Mittel (32) zum Positionieren eines Werkstückträgers (12) aktiviert sind, sobald eine "n.i.O."-Kodierung des Kodierspeichers (50), von der Leseeinheit (25) gelesen wird.

FIG. 1

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | WERKSTATTSTECHNIK<br>Bd. 74, Nr. 6, 1. Juni 1984,<br>WÜRZBURG, DEUTSCHLAND<br>Seiten 337 - 340;<br>M. SCHEIFELE, J. WARSCHAT: 'simulation eines flexiblen montage systems'<br>* Seite 337, linke Spalte, Absatz 0 - Seite 338, rechte Spalte, Absatz 1; Abbildung 1 *<br>--- | 1-6,9,10 | B23Q7/14 |
| A | DE-A-3 707 412 (PASS ANLAGENBAU GMBH)<br>* Zusammenfassung; Abbildung 1 *<br>--- | 6 | |
| A | US-A-4 570 782 (DON A. CARGILL)<br>* Zusammenfassung; Abbildung 1 *<br>--- | 7 | |
| A | EP-A-0 163 617 (EWAB EJVIN WAHREN AB)<br>* Seite 6, Zeile 10 - Zeile 24; Abbildungen 1-3 *<br><br><br>----- | 8 | |
| | | | **RECHERCHIERTE SACHGEBIETE (Int. Cl.5 )**<br><br>B23Q |

Der vorliegende Recherchenbericht wurde für alle Patentansprüche erstellt

| Recherchenort | Abschlußdatum der Recherche | Prüfer |
|---|---|---|
| DEN HAAG | 24 JUNI 1992 | RAMBAUD P.M.J. |

**KATEGORIE DER GENANNTEN DOKUMENTE**

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes
 Dokument

EPO FORM 1503 03.82 (P0403)